# EUROPÄISCHE PATENTANMELDUNG

(11) **EP 2 354 515 A1**
(43) Veröffentlichungstag der Anmeldung: **10.08.2011**
(21) Anmeldenummer: 10197238.8
(22) Anmeldetag: 29.12.2010
(51) Int. Cl.: F02G 5/02, F01D 17/14, F01K 23/06

(54) **Verfahren zum Betreiben einer Brennkraftmaschine mit einer Dampfkraftanlage**

(30) Priorität: 22.01.2010 DE 102010001118
(71) Anmelder: Robert Bosch GmbH, 70469 Stuttgart (DE)
(72) Erfinder: Stegmaier, Juergen, 71638 Ludwigsburg (DE); Schmitt, Manfred, 64646 Heppenheim (DE)

(57) **Zusammenfassung**

Es wird ein Verfahren vorgeschlagen zum Betreiben einer Brennkraftmaschine (10) mit einer Dampfkraftanlage (12), bei der das Abgas der Brennkraftmaschine (10) den Dampf mindestens mittelbar erhitzt und dieser eine Turbine (26) antreibt, wobei die Dampfkraftanlage (12) zeitweise, insbesondere zu Betriebsbeginn zunächst in einem Schutz-Betriebsmodus betrieben wird, in dem der Schutz der Turbine (26) vor einer Beschädigung durch Wassertröpfchen Priorität hat.

## Beschreibung

### Stand der Technik

Die Erfindung betrifft ein Verfahren nach dem Oberbegriff des Anspruchs 1, sowie eine Steuer- und/oder Regeleinrichtung, ein Computerprogramm und ein Speichermedium nach den nebengeordneten Patentansprüchen.

Dampfkraftanlagen, welche die Abwärme im Abgas einer Brennkraftmaschine ausnutzen, sind bekannt. Die DE 10 2006 057 247 A1 beschreibt eine Dampfkraftanlage, wobei in einem Abgastrakt ein Wärmetauscher eines Kreislaufs eines Arbeitsmediums untergebracht ist. Dem Wärmetauscher ist ein Förderaggregat im Kreislauf des Arbeitsmediums vorgeschaltet. Der Kreislauf des Arbeitsmediums enthält ein Turbinenteil, über den mindestens ein im Ansaugtrakt der Brennkraftmaschine angeordnetes Verdichterteil angetrieben ist.

### Offenbarung der Erfindung

Das der Erfindung zugrunde liegende Problem wird durch ein Verfahren nach Anspruch 1 sowie durch eine Steuer- und/oder Regeleinrichtung, ein Computerprogramm und ein Speichermedium nach den nebengeordneten Ansprüchen gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die Erfindung weist den Vorteil auf, dass bei einer Dampfkraftanlage, welche die Abwärme im Abgas einer Brennkraftmaschine ausnutzt, eine Dampfturbine vor Beschädigung durch Flüssigkeits-, insbesondere Wassertröpfchen im Dampfstrahl geschützt ist. Außerdem wird eine schnelle Betriebsbereitschaft der Dampfkraftanlage hergestellt, um möglichst frühzeitig eine Dampfkreisleistung bereitzustellen und damit zur Senkung des Kraftstoffverbrauchs beizutragen.

Beispielsweise ist eine Dampfkraftanlage im Abgasstrang der Brennkraftmaschine wie folgt aufgebaut: Das Abgas durchströmt ein Primärsystem des Wärmetauschers. Im Sekundärsystem wird das von einer Speisepumpe geförderte kondensierte Wasser so erhitzt, dass Dampf entsteht. Der in dem Wärmetauscher erzeugte Dampf wird in eine Turbine geleitet, wo er sich in einer Düse entspannt und ein Laufrad der Turbine antreibt. Ein Auslass der Turbine fördert den entspannten Dampf in einen Kondensator. Im Kondensator wird der entspannte Dampf gekühlt, so dass dieser zu Wasser kondensiert. Dieses Wasser wird von der Speisepumpe angesaugt und erneut dem Wärmetauscher zugeführt.

Die Erfindung geht von der Überlegung aus, dass Dampfturbinen beschädigt werden können, wenn aus dem Dampf kondensierte Wassertröpfchen mit hoher Geschwindigkeit auf die Beschaufelung des Laufrades der Dampfturbine treffen. Diese Gefahr besteht speziell während eines Anfahrvorgangs, wenn Teile des Dampfkreislaufs sowie die Dampfturbine selbst noch nicht ihre jeweilige Betriebstemperatur erreicht haben. Daher wird vorgeschlagen, die Dampfkraftanlage während eines Anfahrvorgangs in einem Schutz-Betriebsmodus zu betreiben, in dem der Schutz der Turbine vor einer Beschädigung durch Wassertröpfchen Vorrang hat. In einem solchen Schutz-Betriebsmodus kann beispielsweise darauf geachtet werden, , dass der in dem Wärmetauscher erzeugte Dampf stromabwärts an kühlen Rohrwandungen möglichst nicht kondensieren kann. Damit wird die Gefahr zumindest verringert, dass einzelne Tröpfchen von der Dampfströmung mitgerissen und stark beschleunigt werden, wodurch bei deren Aufprall auf dem Laufrad Schäden entstehen können.

Eine erstes Bündel von Maßnahmen bezweckt, dass in dem Schutz-Betriebsmodus gegenüber einem Normal-Betriebsmodus eine Relativgeschwindigkeit zwischen einem eintretenden Dampfstrahl und einem Laufrad der Turbine abgesenkt wird. Die Relativgeschwindigkeit charakterisiert die Aufprallgeschwindigkeit der Wassertröpfchen auf das Laufrad der Turbine. Je geringer die Relativgeschwindigkeit ist, umso geringer ist die Wahrscheinlichkeit einer Beschädigung des Laufrades. Auf diese Weise wird vorteilhaft die Dauerfestigkeit der Turbine und damit der Dampfkraftanlage insgesamt erhöht.

Dazu sieht das erfindungsgemäße Verfahren vor, dass die Relativgeschwindigkeit zwischen dem eintretendem Dampfstrahl und dem Laufrad der Turbine gesenkt wird, indem wenigstens zeitweise ein Querschnitt einer Düse zur Steuerung des eintretenden Dampfstrahls vergrößert wird und/oder die Turbine ohne eine Last betrieben wird und/oder die Drehung der Turbine durch einen Motor unterstützt wird. Wird der Querschnitt der Düse vergrößert, so stellt sich über der Düse ein geringeres Druckverhältnis ein, das wiederum zu einer geringeren Beschleunigung und einer geringeren Austrittsgeschwindigkeit des Dampfstrahls führt. Ergänzend oder alternativ kann die Relativgeschwindigkeit zwischen dem Dampfstrahl und dem Laufrad der Turbine weiter gesenkt werden, wenn die Turbine ohne eine Last betrieben wird, also frei drehen kann. Wiederum ergänzend oder alternativ kann die Relativgeschwindigkeit weiter vermindert werden, wenn die Turbine durch einen Motor unterstützt wird. Beispielsweise kann das Laufrad mit einem Elektromotor gekoppelt sein, der das Laufrad der Turbine wenigstens in etwa auf die Dampfstrahlgeschwindigkeit synchronisiert. Dadurch kann auf eine dreifache Weise einer Beschädigung des Laufrades vorgebeugt werden. Vorteilhafterweise kann der Elektromotor in dem anschließenden Normal-Betriebsmodus der Dampfkraftanlage als Generator arbeiten, um elektrische Energie zu erzeugen.

Ein zweites Bündel von Maßnahmen bezweckt, dass in dem Schutz-Betriebsmodus gegenüber dem Normal-Betriebsmodus eine Temperatur des in einem Dampferzeuger erzeugten Dampfes bis zu einem Grenzwert oberhalb einer normalen Betriebstemperatur erhöht wird. Während die oben beschriebenen ersten Maßnahmen die Relativgeschwindigkeit der aus dem Dampf kondensierten Wassertröpfchen in Bezug auf das Laufrad absenken, bewirken die zweiten Maßnahmen, dass Wassertröpfchen in dem Dampfstrahl entweder überhaupt nicht oder nur in verminderter Menge gebildet werden, also eine Rückkondensation des Dampfstrahls im Wesentlichen unterbleibt. Beide Maßnahmenbündel können einander ergänzen und ihre Wirkungen vorteilhaft addieren.

Dazu sieht das erfindungsgemäße Verfahren vor, dass die Temperatur des in dem Wärmetauscher ("Dampferzeuger") erzeugten Dampfes bis zu einem Grenzwert oberhalb der normalen Betriebstemperatur erhöht wird, indem ein abgasseitiger Bypass eines Wärmetauschers geschlossen oder in seiner Durchströmung vermindert wird, sofern eine Betriebstemperatur des Wärmetauschers einen maximal zulässigen Wert nicht überschritten hat, und/oder eine Fördermenge einer Speisepumpe angepasst wird, und/oder die Kühlung eines Kondensators ausgesetzt oder verringert wird, sofern ein Betriebsdruck der Dampfkraftanlage einen maximal zulässigen Wert nicht überschritten hat. Damit ist es möglich, den Dampf gegenüber dem Normal-Betriebsmodus zu "überhitzen", so dass die Wahrscheinlichkeit für die Entstehung der schädlichen Wassertröpfchen geringer wird. Der Grenzwert für die Temperatur des Dampfes wird vorzugsweise so gewählt, dass kein Teil der Dampfkraftanlage übermäßig beansprucht wird oder die Sicherheit gefährdet ist. Sofern der Abgaswärmetauscher über einen abgasseitigen Bypass verfügt, wird der Bypass während des Schutz-Betriebsmodus zunächst geschlossen, so dass der gesamte Abgasstrom den Wärmetauscher durchströmen kann. Zugleich wird eine Temperatur des Wärmetauschers überwacht. Sobald eine obere zulässige Betriebstemperatur des Wärmetauschers erreicht oder gar überschritten wird, wird der Bypass geöffnet, mit der Folge, dass die den Wärmetauscher durchströmende Abgasmenge vermindert wird. Vorzugsweise wird als Regelgröße zur Einstellung des Bypasses eine innere Wärmetauschertemperatur genutzt, welche beispielsweise auch durch ein thermisches Wärmetauschermodell anhand von Eingangsgrößen, wie etwa einer Abgastemperatur, einem Abgasmassenstrom, einer Fluidtemperatur und einem Fluidmassenstrom ermittelt werden kann.

Alternativ oder ergänzend kann eine Fördermenge der Speisepumpe geregelt bzw. eingestellt werden. Die Speisepumpe fördert Wasser in einen Fluideinlass des Wärmetauschers, so dass mittels der Fördermenge die Dampf-Austrittstemperatur aus dem Wärmetauscher eingestellt werden kann. Beispielsweise beträgt in dem Normal-Betriebsmodus der Dampfkraftanlage ein dem Wärmetauscher zugeführter Fluidmassenstrom zwischen 8 g/s und 60 g/s (Gramm pro Sekunde). Während des Schutz-Betriebsmodus kann es vorteilhaft sein, den Fluidmassenstrom gegenüber diesen Werten entsprechend zu reduzieren, da zum Aufheizen des Wärmetauschers Energie benötigt wird, die nicht zur Verdampfung und Überhitzung zur Verfügung steht. Der Fluidmassenstrom kann also mittels einer Drehzahländerung der Speisepumpe so eingestellt beziehungsweise geregelt werden, dass die Dampftemperatur gegenüber dem Normal-Betriebsmodus erhöht wird. Die Temperatur des in dem Wärmetauscher erzeugten Dampfes beträgt in dem Normal-Betriebsmodus beispielsweise zwischen 270°C und 360°C.

Alternativ oder ergänzend kann die Kühlung des Kondensators eingestellt werden. Beispielsweise kann die Kühlung des Kondensators ausgesetzt werden, wodurch weniger Wasser kondensiert, und nachfolgend im Wärmetauscher eine höhere Dampftemperatur erreichbar ist. Zugleich wird der Betriebsdruck der Dampfkraftanlage überwacht. Wird der maximal zulässige Betriebsdruck erreicht oder überschritten, so wird die Kühlung des Kondensators wieder eingeschaltet beziehungsweise stufenlos erhöht. Beispielsweise kann je nach dem Betriebspunkt der Brennkraftmaschine die erforderliche Kühlleistung des Kondensators 19 kW bis 140 kW betragen. Vorzugsweise wird die Kühlleistung des Kondensators nicht geschaltet, sondern geregelt. Dabei ist der zulässige Betriebsdruck der Dampfkraftanlage die Regelgröße. Soll dagegen möglichst viel Abgaswärme in das Kühlsystem der Brennkraftmaschine übertragen werden, an das der Kondensator angeschlossen ist, so wird der Kondensator schon zu Beginn gekühlt. Dies kann vorteilhaft sein zur Warmlaufverkürzung oder zur Emissionsverringerung der Brennkraftmaschine. In diesem Fall wird beispielsweise die Kühlleistung am Kondensator so geregelt, dass sich ein Betriebsdruck von beispielsweise 2 bar einstellt. Dabei ist es auch möglich, die Regelung der Kondensatorkühlung in Bezug auf den Schutz-Betriebsmodus einerseits und die Warmlaufverkürzung und Emissionsverringerung andererseits auszuführen, also beide Erfordernisse zu kombinieren.

Weiterhin sieht das Verfahren vor, dass der Schutz-Betriebsmodus beendet wird, wenn die Dampfkraftanlage eine normale Betriebstemperatur erreicht hat. Damit kann raschestmöglich von dem Schutz-Betriebsmodus auf den Normal-Betriebsmodus übergegangen werden, weil bei der normalen Betriebstemperatur keine Beschädigung der Turbine durch Wassertröpfchen zu erwarten ist. Das Kriterium zur Umschaltung kann dabei entweder durch verschiedene Temperatur- und/oder Drucksensoren an verschiedenen Stellen des Dampfkreislaufs gewonnen werden, oder durch ein thermisches Modell rechnerisch ermittelt werden. Im Normalbetrieb wird eine im Wirkungsgrad optimierte Prozessführung des Dampfkreislaufes erreicht.

Weiterhin sieht das Verfahren vor, dass mindestens ein Betriebsdruck der Dampfkraftanlage, ein Druckverhältnis zwischen einem Einlass und einem Auslass der Turbine, ein Fluidmassenstrom einer Speisepumpe, eine Temperatur eines Wärmetauschers zwischen Abgas und Dampf, eine Temperatur eines Kondensators, und/oder eine Temperatur der Turbine überwacht wird. Damit kann zum einen sicher zwischen dem Schutz-Betriebsmodus und dem Normal-Betriebsmodus unterschieden werden, und zum andern kann der Schutz-Betriebsmodus optimal eingestellt oder geregelt werden. Ebenso können auf diese Weise Beschädigungen der Dampfkraftanlage besonders zuverlässig vermieden werden.

Ergänzend sieht das Verfahren vor, dass dann, wenn das Druckverhältnis zwischen dem Einlass und dem Auslass der Turbine einen Schwellwert erreicht oder überschreitet, die Fördermenge einer Speisepumpe vermindert wird. Übersteigt etwa das Druckverhältnis einen Schwellwert, so wird die Fördermenge der Speisepumpe so weit reduziert, dass das Druckverhältnis wieder unterhalb des Schwellwerts liegt. Dadurch kann verhindert werden, dass die Dampfaustrittsgeschwindigkeit aus der Düse der Turbine so groß ist, dass das Laufrad der Turbine durch Wassertröpfchen beschädigt werden könnte. Der Schwellwert für das Druckverhältnis wird entsprechend vorgegeben.

Das Verfahren sieht weiterhin vor, dass eine Überhitzungstemperatur des Dampfes - bei Verwendung von Wasser als Betriebsmittel - im normalen Betrieb zwischen 270°C und 360°C beträgt. Mit einer durch diese Grenzen bestimmten Überhitzungstemperatur des Dampfes kann im Normal-Betriebsmodus ein besonders guter Wirkungsgrad der Dampfkraftanlage erreicht werden. Ausgehend davon ist es möglich, die in dem Wärmetauscher erzeugte Dampftemperatur zu Betriebsbeginn - also während des Schutz-Betriebsmodus - zu erhöhen, um die Entstehung der schädlichen Wassertröpfchen zu reduzieren oder zu verhindern. Die Obergrenze der Überhitzungstemperatur des Dampfes bestimmt sich durch die Temperaturverträglichkeiten der Komponenten der Dampfkraftanlage sowie durch Sicherheitsforderungen.

Nachfolgend werden beispielhafte Ausführungsformen der Erfindung unter Bezugnahme auf die Zeichnung erläutert. In der Zeichnung zeigen:
- Figur 1: ein Schema einer Dampfkraftanlage; und
- Figur 2: ein Flussdiagramm zu einem Ablauf des Verfahrens in einem Schutz-Betriebsmodus.

Es werden für funktionsäquivalente Elemente und Größen in allen Figuren auch bei unterschiedlichen Ausführungsformen die gleichen Bezugszeichen verwendet.

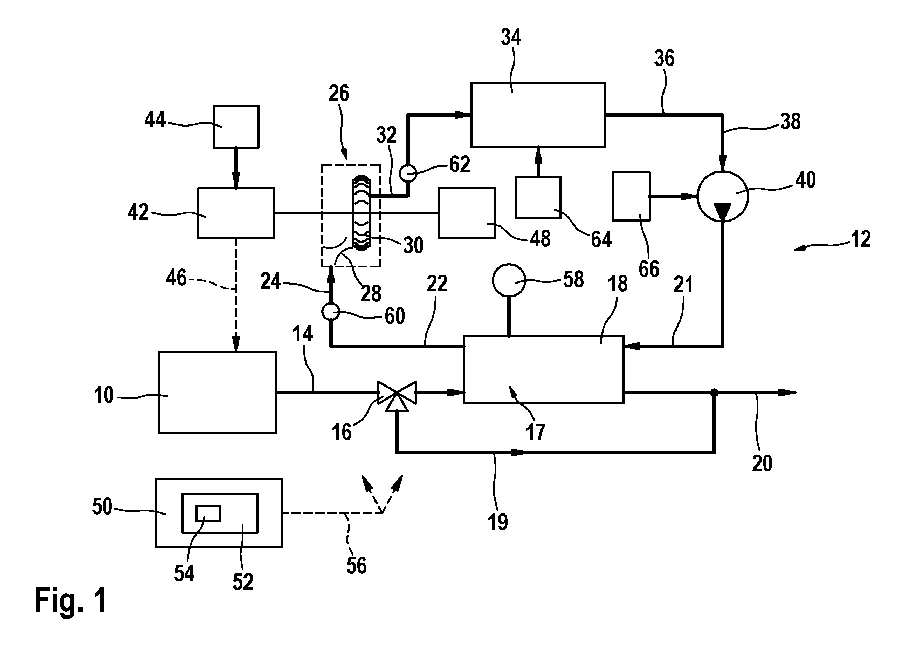

Die Figur 1 zeigt eine Dampfkraftanlage 12, welche von dem Abgassystem einer Brennkraftmaschine 10 mit Energie versorgt wird. Das Abgas der Brennkraftmaschine 10 wird über ein Abgasrohr 14 und ein vorliegend als Dreiwegeventil 16 ausgeführtes Bypassventil einem Wärmetauscher 18 zugeführt, welcher die Aufgabe eines Dampferzeugers 17 hat. Ein dritter Anschluss des Dreiwegeventils 16 führt Abgas über einen Bypass 19 am Wärmetauscher 18 vorbei. Das Abgas durchströmt ein Primärsystem des Wärmetauschers 18 und wird danach zusammen mit dem durch den Bypass 19 geleiteten Anteil durch ein Auslassrohr 20 abgeleitet.

Ein Sekundärsystem des Wärmetauschers umfasst einen Fluideintritt 21 und einen Dampfaustritt 22. Der Dampfaustritt 22 führt zu einem Einlass 24 einer Turbine 26. Die Turbine 26 ist als eine Gleichdruckturbine ausgeführt und umfasst eine Düse 28 und ein Laufrad 30. Ein Auslass 32 der Turbine 26 führt zu einem Kondensator 34. Ein Auslass 36 des Kondensators führt zu einem Einlass 38 einer Speisepumpe 40. Die Speisepumpe 40 arbeitet auf den Fluideintritt 21 des Wärmetauschers 18, so dass der Dampfkreislauf geschlossen ist.

Die Turbine 26 arbeitet auf eine Last 42, welche durch ein Stellglied 44 gesteuert wird. Eine gestrichelte Linie 46 deutet an, dass die Last 42 einen Antrieb der Brennkraftmaschine 10 unterstützen kann. Beispielsweise kann die Last 42 ein Verdichterteil sein, welches einen Druck im Ansaugtrakt der Brennkraftmaschine 10 erhöht, so dass während eines Ansaugtaktes der Brennkraftmaschine 10 eine größere Menge an für die Verbrennung erforderlicher Luft in die Zylinder gelangen kann. Weiterhin ist ein Elektromotor 48 an die Turbine 26 gekoppelt. In der Zeichnung der Figur 1 links unten befindet sich eine Steuer- und/oder Regeleinrichtung 50, welche ein Speichermedium 52 und ein Computerprogramm 54 umfasst. Gestrichelte Pfeile 56 deuten an, dass die Steuer- und/oder Regeleinrichtung 50 mit verschiedenen Komponenten der Dampfkraftanlage 12 verbunden ist.

Im Betrieb der Dampfkraftanlage 12 werden unter anderem gemessen: Eine Temperatur des Wärmetauschers 18 mittels eines Temperatursensors 58, ein Druck am Einlass 24 der Turbine 26 mittels eines Drucksensors 60 und ein Druck am Auslass 32 der Turbine 26 mittels eines Drucksensors 62. Weiterhin sind vorhanden ein Stellglied 64 zur Einstellung der Kühlung des Kondensators 34 sowie ein Stellglied 66 zur Einstellung einer Drehzahl der Speisepumpe 40.

Wird durch die Steuer- und/oder Regeleinrichtung 50 festgestellt, dass die Dampfkraftanlage 12 beziehungsweise die Brennkraftmaschine 10 sich in einem Anfahrzustand befindet, so wird in einen Schutz-Betriebsmodus umgeschaltet. Die Information dazu erhält die Steuer- und/oder Regeleinrichtung 50 unter anderem aus den Daten der Drucksensoren 60 und 62, des Temperatursensors 58 sowie aus in der Steuer- und/oder Regeleinrichtung 50 hinterlegten Modellen des Dampfkreislaufes. Mehrere, in dem Kreislauf der Dampfkraftanlage 12 eingezeichnete Pfeile (ohne Bezugszeichen) geben die Richtung des Fluidstroms, des Dampfstroms und des Abgasstroms an.

In dem Schutz-Betriebsmodus werden mehrere Maßnahmen gleichzeitig durchgeführt: Ein Querschnitt der Düse 28 der Turbine 26 wird vergrößert, so dass die Geschwindigkeit des eintretenden Dampfstrahls sich vermindert. Dadurch wird eine Relativgeschwindigkeit des eintretenden Dampfstrahls in Bezug auf die Drehung des Laufrades 30 vermindert. Das Stellglied 44 koppelt die Last 42 von der Turbine 26 ab. Der Elektromotor 48 wird bestromt und treibt die Turbine 26 so an, dass das Laufrad 30 mit der Geschwindigkeit des eintretenden Dampfstrahles im Wesentlichen synchronisiert wird.

Weiterhin werden verschiedene Maßnahmen durchgeführt, um die Temperatur des Dampfes am Dampfaustritt 22 des Wärmetauschers 18 möglichst hoch zu halten. Erstens wird das Dreiwegeventil 16 so gestellt, dass der aus der Brennkraftmaschine 10 austretende Abgasstrom vollständig durch das Primärsystem des Wärmetauschers 18 geleitet wird, so lange eine durch den Temperatursensor 58 überwachte Temperatur einen Schwellwert nicht überschreitet. Wird dieser Schwellwert erreicht oder überschritten, so öffnet das Dreiwegeventil den Weg über den Bypass 19 wenigstens teilweise, um weniger Abgas durch den Wärmetauscher 18 zu führen und so dessen Temperatur unterhalb des Schwellwerts zu halten.

Zweitens wird mittels des Stellglieds 66 die Fördermenge der Speisepumpe 40 so eingestellt (zu Betriebsbeginn also vgl. niedrig gehalten), dass sich eine gewünschte Dampftemperatur am Dampfaustritt 22 des Wärmetauschers 18 ergibt. Die Fördermenge der Speisepumpe 40 wird vorliegend durch eine Drehzahl der Speisepumpe 40 eingestellt. Ergänzend wird die Fördermenge der Speisepumpe 40 abhängig von einem Druckunterschied zwischen dem Einlass 24 und dem Auslass 32 der Turbine 26 eingestellt. Der Druckunterschied wird dabei durch eine Differenz der in den Drucksensoren 60 und 62 ermittelten Drücke bestimmt.

Drittens wird der Dampfkreislauf schnell aufgeheizt, indem die Kühlung des Kondensators 34 so lange ausgesetzt oder verringert wird, wie ein zulässiger Betriebsdruck der Dampfkraftanlage 12 noch nicht erreicht wurde. Wird dieser Betriebsdruck erreicht, so wird die Kühlung des Kondensators 34 eingeschaltet beziehungsweise verstärkt.

Wenn aufgrund des Temperatursensors 58 sowie der beiden Drucksensoren 60 und 62 sowie eines in der Steuer- und/oder Regeleinrichtung 50 hinterlegten Modells erkannt wird, dass der Anfahrvorgang der Dampfkraftanlage 12 abgeschlossen ist, so wird in einen Normal-Betriebsmodus geschaltet. Dabei wird die Last 42 an die Turbine 26 gekoppelt und kann den Antrieb der Brennkraftmaschine 10 unterstützen. Der Elektromotor 48 wird entweder abgeschaltet oder in den Generatorbetrieb umgeschaltet. Die übrigen Stellglieder der Dampfkraftanlage 12 werden entsprechend dem Normal-Betriebsmodus betrieben.

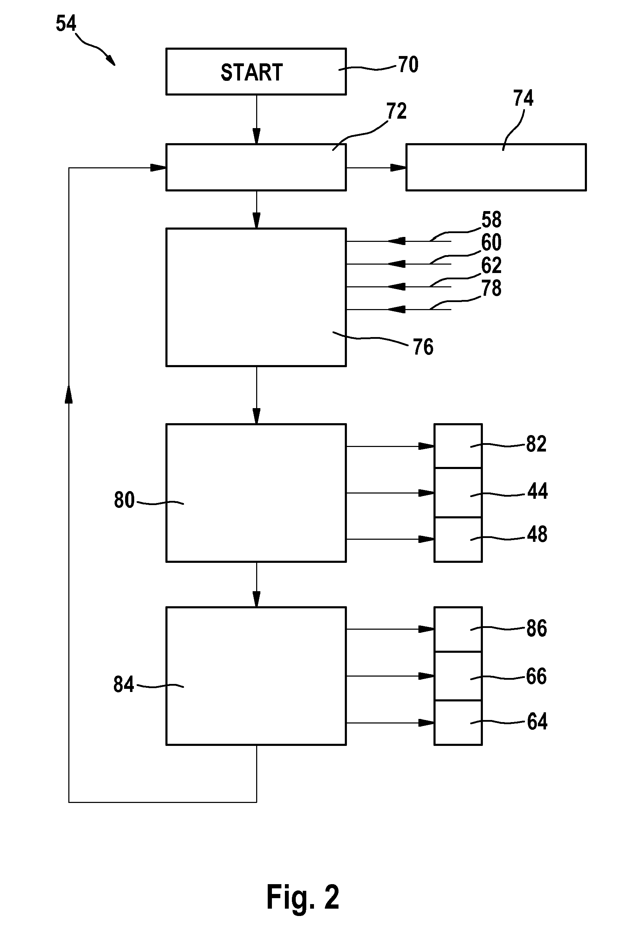

Figur 2 zeigt ein Flussdiagramm zum Ablauf des Verfahrens mittels eines Computerprogramms 54 in der Steuer- und/oder Regeleinrichtung 50. Ausgehend von einem Startblock 70 wird in einem Block 72 abgefragt, ob die Voraussetzungen für einen Schutz-Betriebsmodus erfüllt sind. Ist dies nicht der Fall, so wird in einen Endeblock 74 verzweigt, in welchem ein Normal-Betriebsmodus der Dampfkraftanlage 12 hergestellt wird und das dargestellte Flussdiagramm somit verlassen wird.

Ist dies jedoch der Fall, so werden in einem nachfolgenden Block 76 verschiedene Größen des Dampfkreislaufes ermittelt. Dazu gehören unter anderem die Temperatur des Temperatursensors 58, die Drücke der Drucksensoren 60 und 62, sowie verschiedene in der Steuer- und/oder Regeleinrichtung 50 abgespeicherte Modellgrößen 78 der Dampfkraftanlage 12. In einem folgenden Block 80 werden verschiedene Maßnahmen zur Reduzierung der Relativgeschwindigkeit zwischen dem in die Turbine 26 eintretenden Dampfstrahl und dem Laufrad 30 der Turbine durchgeführt. Dazu wird ein (in der Figur 1 nicht dargestelltes) Stellglied 82 betätigt, um den Querschnitt der Düse 28 zu vergrößern. Weiterhin wird von dem Block 80 ein Stellglied 44 betätigt, um die Last 42 von der Turbine 26 abzukoppeln. Ferner schaltet der Block 80 den Elektromotor 48 über das Stellglied 48 so, dass er als Motor betrieben wird und die Drehzahl des Laufrades 30 an die Geschwindigkeit des durch die Düse 28 einströmenden Dampfstrahls anpasst.

In einem folgenden Block 84 werden verschiedene Maßnahmen durchgeführt, um die Temperatur des in die Turbine 26 eintretenden Dampfstrahls über einen Normalwert hinaus zu erhöhen. Dazu wird mittels eines Stellgliedes 86 das Dreiwegeventil 16 so eingestellt, dass ein Abgasstrom durch den Bypass 19 vermindert oder gesperrt wird. Weiterhin wird über das Stellglied 66 die Fördermenge der Speisepumpe 40 angepasst. Über das Stellglied 64 wird die Kühlleistung des Kondensators 34 herabgesetzt, solange ein zulässiger Betriebsdruck der Dampfkraftanlage 12 nicht überschritten ist. Anschließend verzweigt das Programm zurück zum Block 72, wo erneut geprüft wird, ob die Bedingung für den Schutz-Betriebsmodus erfüllt sind. Ist dies der Fall, so wird wiederum zu dem Block 76 verzweigt, um die verschiedenen Größen einzustellen oder zu regeln, wie es für den Schutz-Betriebsmodus erforderlich ist.

Das Verfahren wird abgebrochen, sobald im Block 72 festgestellt wird, dass der Anfahrzustand beendet wurde. Dann kann im Block 74 in den Normal-Betriebsmodus geschaltet werden.

## Patentansprüche

1. Verfahren zum Betreiben einer Brennkraftmaschine (10) mit einer Dampfkraftanlage (12), bei der das Abgas der Brennkraftmaschine (10) den Dampf mindestens mittelbar erhitzt und dieser eine Turbine (26) antreibt, **dadurch gekennzeichnet, dass** die Dampfkraftanlage (12) zeitweise, insbesondere zu Betriebsbeginn zunächst in einem Schutz-Betriebsmodus betrieben wird, in dem der Schutz der Turbine (26) vor einer Beschädigung durch Flüssigkeitströpfchen Priorität hat.

2. Verfahren nach Anspruch 1, **dadurch gekennzeichnet, dass** in dem Schutz-Betriebsmodus gegenüber einem Normal-Betriebsmodus eine Relativgeschwindigkeit zwischen einem eintretenden Dampfstrahl und einem Laufrad (30) der Turbine (26) abgesenkt wird.

3. Verfahren nach Anspruch 2, **dadurch gekennzeichnet, dass** die Relativgeschwindigkeit zwischen dem eintretenden Dampfstrahl und dem Laufrad (30) der Turbine (26) gesenkt wird, indem wenigstens zeitweise
- ein Querschnitt einer Düse (28) zur Steuerung des eintretenden Dampfstrahls vergrößert wird und/oder
- die Turbine (26) ohne eine Last (42) betrieben wird und/oder
- die Drehung der Turbine (26) durch einen Motor (48) unterstützt wird.

4. Verfahren nach einem der vorhergehenden Ansprüche, **dadurch gekennzeichnet, dass** in dem Schutz-Betriebsmodus gegenüber dem Normal-Betriebsmodus eine Temperatur des in einem Dampferzeuger (17) erzeugten Dampfes bis zu einem Grenzwert oberhalb einer normalen Betriebstemperatur erhöht wird.

5. Verfahren nach Anspruch 4, **dadurch gekennzeichnet, dass** die Temperatur des Dampfes bis zu einem Grenzwert oberhalb der normalen Betriebstemperatur erhöht wird, indem
- ein abgasseitiger Bypass (19) eines Wärmetauschers (18) geschlossen oder in seiner Durchströmung vermindert wird, sofern eine zulässige Betriebstemperatur des Wärmetauschers (18) unterschritten ist, und/oder
- eine Fördermenge einer Speisepumpe (40) angepasst wird, und/oder
- die Kühlung eines Kondensators (34) ausgesetzt oder verringert wird, sofern ein maximal zulässiger Betriebsdruck der Dampfkraftanlage (12) unterschritten ist.

6. Verfahren nach einem der vorhergehenden Ansprüche, **dadurch gekennzeichnet, dass** der Schutz-Betriebsmodus beendet wird, wenn die Dampfkraftanlage (12) eine normale Betriebstemperatur erreicht hat.

7. Verfahren nach mindestens einem der vorstehenden Ansprüche, **dadurch gekennzeichnet, dass** mindestens ein Betriebsdruck der Dampfkraftanlage (12), ein Druckverhältnis zwischen einem Einlass (24) und einem Auslass (32) der Turbine (26), ein Fluidmassenstrom einer Speisepumpe (40), eine Temperatur eines Wärmetauschers (18) zwischen Abgas und Dampf, eine Temperatur eines Kondensators (34), und/oder eine Temperatur der Turbine (26) überwacht wird.

8. Verfahren nach mindestens einem der vorstehenden Ansprüche, **dadurch gekennzeichnet, dass** dann, wenn das Druckverhältnis zwischen dem Einlass (24) und dem Auslass (32) der Turbine (26) einen Schwellwert erreicht oder überschreitet, die Fördermenge einer Speisepumpe (40) vermindert wird.

9. Verfahren nach mindestens einem der vorstehenden Ansprüche, **dadurch gekennzeichnet, dass** eine Überhitzungstemperatur des Dampfes im normalen Betrieb zwischen 270°C und 360°C beträgt.

10. Computerprogramm (54), **dadurch gekennzeichnet, dass** es zur Anwendung in einem Verfahren nach einem der vorstehenden Ansprüche programmiert ist.

11. Speichermedium (52) für eine Steuer- und/oder Regeleinrichtung (50), **dadurch gekennzeichnet, dass** auf ihm ein Computerprogramm (54) zur Anwendung in einem Verfahren nach einem der Ansprüche 1 bis 9 abgespeichert ist.

12. Steuer- und/oder Regeleinrichtung (50), **dadurch gekennzeichnet, dass** sie zur Anwendung in einem Verfahren nach einem der Ansprüche 1 bis 9 programmiert ist.
